# FASCICULE DE BREVET EUROPEEN

(11) **EP 3 642 511 B1**
(45) Date de publication et mention de la délivrance du brevet: **06.04.2022**
(21) Numéro de dépôt: 18737950.8
(22) Date de dépôt: 18.06.2018
(51) Int. Cl.: F16H 25/22

(54) **MÉCANISME DE VIS A ROULEAUX**
WALZENSCHRAUBENMECHANISMUS
ROLLER SCREW MECHANISM

(30) Priorité: 19.06.2017 FR 1755568
(43) Date de publication de la demande: 29.04.2020
(73) Titulaire: Dubus, Jérôme, 73100 Aix les Bains (FR)
(72) Inventeur: Dubus, Jérôme, 73100 Aix les Bains (FR)
(74) Mandataire: Prugneau, Philippe
(86) Numéro de dépôt international: PCT/FR2018/051447
(87) Numéro de publication internationale: WO 2018/234674

(56) Documents cités:
- DE-B- 1 043 743
- FR-A1- 2 984 443
- FR-A1- 3 036 451

## Description

### Domaine technique

L'invention concerne le domaine des mécanismes de vis à rouleaux, qui permettent de transformer un mouvement de rotation en un mouvement de translation, et inversement.

### Technique antérieure

Un mécanisme de vis à rouleaux comprend typiquement une vis, un écrou disposé autour de la vis coaxialement à celle-ci, et une pluralité de rouleaux interposés entre la vis et l'écrou et dont les axes longitudinaux sont parallèles à celui de la vis. La vis et les rouleaux sont munis de filetages extérieurs, et l'écrou d'un filetage intérieur. Les filetages des rouleaux sont en prises avec les filetages de la vis et de l'écrou.

Le brevet FR 2980545 décrit des dispositifs ayant cette configuration, et plus particulièrement un mécanisme de vis à rouleaux satellites et un mécanisme de vis à rouleaux à recirculation. Les zones de contacts respectent des géométries de contacts ponctuels obtenues par des profils de filetage non-conjugués les uns aux autres. Dans le cas du brevet FR 2980545, les filets des rouleaux présentent des flancs convexes en contact avec des sections droites des filets de la vis et de l'écrou. Le document FR3036451 A1 décrit aussi un mécanisme de vis à rouleaux. Ce mécanisme à rouleaux permet de transmettre un effort plus important dans un sens de translation que dans l'autre,grâce à des filetages dont les flancs sont asymétriques.

### Exposé de l'invention

Les zones de contact des mécanismes de vis à rouleaux développés jusqu'ici se limitent, à charges nulles, à des géométries de contact ponctuel. Cependant, la nature ponctuelle de ces zones de contact fait qu'en pratique des surfaces réduites supportent les efforts mécaniques apparaissant en cours d'utilisation des mécanismes de vis à rouleaux, limitant leurs capacités de charge et/ou leurs durées de vie.

Le but de l'invention est de repousser les limites des mécanismes de vis à rouleaux en utilisant une géométrie de contact curviligne.

A cet effet, l'invention a pour objet un mécanisme de vis à rouleaux conformément à la revendication 1.

Dans un tel mécanisme, basé sur des géométries de contact curvilignes, les efforts sont répartis sur des surfaces plus importantes que dans les cas de géométrie de contact ponctuel. En conséquence, des capacités de charges extrêmement élevées et/ou des durées de vie bien plus longue peuvent être obtenues. Les personnes familières du domaine apprécieront que des avances par tour plus importantes et/ou des optimisations de poids, de volume, de rendement et de fiabilités deviennent également réalisables.

Le mécanisme de vis à rouleaux selon l'invention peut avantageusement présenter les caractéristiques suivantes :
- au niveau des zones de contact, selon un premier mode de réalisation :
   - les filetages des rouleaux peuvent avoir un profil droit, et
   - les filetages des rouleaux peuvent entrer en contact avec les filetages de la vis et de l'écrou selon des segments de droites,
- au niveau des zones de contact, selon un second mode de réalisation :
   - les filetages des rouleaux peuvent entrer en contact avec les filetages de la vis et de l'écrou selon des segments de courbes, et
   - les filetages des rouleaux peuvent avoir un profil convexe et les filetages de la vis et de l'écrou peuvent avoir un profil concave, ou
   - les filetages des rouleaux peuvent avoir un profil concave et les filetages de la vis et de l'écrou peuvent avoir un profil convexe,
- une avance par tour du mécanisme peut être comprise entre zéro fois et une fois le diamètre de la vis,
- une avance par tour du mécanisme peut être comprise entre plus de une fois et quatre fois le diamètre de la vis, et
- si on considère une distance d'engagement définie comme une première différence de distances à l'axe longitudinal de la vis entre un sommet du filetage de l'un des rouleaux et un sommet du filetage de la vis lorsque le mécanisme de vis à rouleaux est monté, et si on considère une seconde différence de distances à l'axe longitudinal de la vis entre les deux extrémités du segment de contact entre la vis et l'un des rouleaux, alors ladite seconde différence de distances est égale à au moins 10% de ladite distance d'engagement.

L'invention peut s'étendre à un dispositif d'actionnement comprenant un mécanisme de vis à rouleaux par exemple pour transformer un mouvement de rotation en un mouvement de translation ou inversement.

Dans la description qui suit, une géométrie de contact à segments curvilignes s'entend dans le sens ou un contact entre deux surfaces se fait de façon sensiblement continue le long d'un segment de ligne droite ou un segment de ligne courbe liant deux points.

Dans ce document un profil d'un élément est défini par l'intersection d'une surface de cet élément par un plan de contact, et deux profils sont dits conjugués l'un de l'autre lorsqu'une portion de l'un des profils peut être décrite par un segment d'une ligne droite ou courbe réciproque d'un segment de ligne droite ou courbe décrivant une portion de l'autre profil.

Ainsi, deux éléments mécaniques présentant deux profils conjugués peuvent être mis en contact selon une géométrie de contact à segment curviligne, le contact se faisant continûment le long d'un segment de ligne droite ou courbe au niveau de portions des deux éléments dont les profils sont conjugués l'un de l'autre et peuvent être décrits, dans ces portions, par deux segments de lignes droites ou courbes réciproques l'un de l'autre.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A représente un éclaté d'un mécanisme à vis à rouleaux satellites comprenant une vis, des rouleaux, et un écrou ; les figures 1B et 1C montrent les positionnements relatifs d'éléments du mécanisme de la figure 1A, dans une coupe médiane pour la figure 1C ;
- la figure 2A indique des coupes longitudinales du mécanisme de la figure 1A à différentes distances à l'axe de la vis et montre des interfaces de contacts curvilignes vis/rouleau; les figures 2B et 2C illustrent des agrandissements des coupes indiquées en Fig. 2A et un exemple comparatif pour le cas conventionnel de contacts ponctuels, respectivement ;
- la figure 3A indique des coupes longitudinales du mécanisme de la figure 1A à différentes distances à l'axe de la vis et montre des interfaces de contacts curvilignes rouleau/écrou; les figures 3B et 3C illustrent des agrandissements des coupes indiquées en Fig. 3A et un exemple comparatif pour le cas conventionnel de contacts ponctuels, respectivement ;
- les figures 4A, 4B, 4C et 4D représentent des coupes en biais selon les plans de coupe indiqués dans les figures 2B et 3B, les figures 4E et 4F représentent des coupes équivalentes à celle des figures 4A à 4B mais dans le cas conventionnel d'un contact ponctuel ;
- les figures 5A et 5B représentent des aires de contact et des allures de distributions de pressions dans le cas de contacts sous charge pour des géométries de contact curviligne ou ponctuel, respectivement ; et
- La figure 5C schématise un actionneur comprenant le mécanisme de vis à rouleaux de la figure 1A.

### Description d'un premier mode de réalisation

Le mécanisme de vis à rouleaux selon l'invention repose sur l'utilisation de filetages ayant des profils fonction les uns des autres, et plus particulièrement des profils conjugués les uns aux autres.

Dans ce mode de réalisation, les filetages des rouleaux ont des flancs présentant un profil droit dans les zones de contact avec la vis et l'écrou, et entrent en contact avec les filetages de la vis et de l'écrou selon des segments de droites.

Dans le cas d'un contact entre deux surfaces hélicoïdales (surface extérieure d'une vis ou d'un rouleau ou surface intérieure d'un écrou) se faisant le long d'un segment de droite, le plan de contact est le plan contenant la normale commune aux deux surfaces en interaction et le segment de droite. Ce plan de contact est perpendiculaire au plan tangent commun aux deux surfaces et est, dans le cas du mécanisme de vis à rouleaux selon l'invention, distinct des plans médians formés par les deux axes longitudinaux desdites surfaces hélicoïdales.

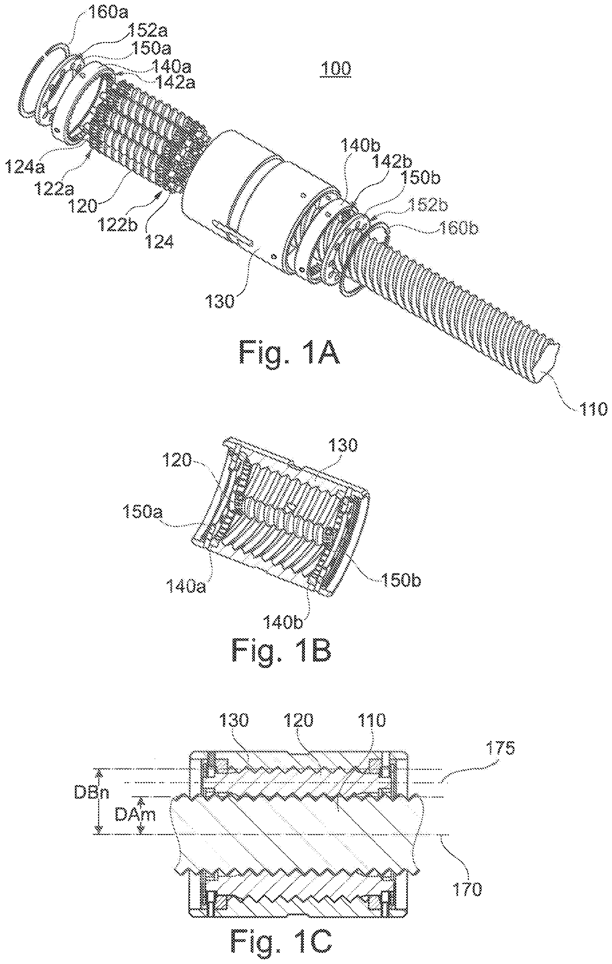

Cette géométrie peut s'illustrer par les figures 1A, 1B, 1C, 2A, 2B, 3A, 3B, 4A, 4B et 5A.

Les figures 1A à 1C représentent un mécanisme de vis à rouleaux satellites, pris comme exemple pour illustrer les principaux éléments constituant un mécanisme de vis à rouleaux.

Il doit être entendu que ni l'invention ni le présent mode de réalisation ne se limitent à ce cas particulier.

L'expression « vis à rouleaux » se réfère aussi bien aux vis à rouleaux satellites qu'aux vis à rouleaux à pas zéro, aux vis à rouleaux à gorges ou vis à recirculation de rouleaux, aux vis inversées et aux vis différentielles.

La caractéristique essentielle des vis à rouleaux est que la vis et l'écrou interagissent via les rouleaux grâce aux zones de contact entre les filetages des rouleaux et ceux de la vis et de l'écrou.

Comme illustré par les figures 1A à 1C, un mécanisme de vis à rouleaux 100 comprend typiquement une vis 110, un écrou 130 disposé autour de la vis coaxialement à celle-ci, et une pluralité de rouleaux 120 interposés entre la vis et l'écrou et dont les axes longitudinaux sont parallèles à celui de la vis.

La vis et les rouleaux sont munis de filetages extérieurs, et l'écrou d'un filetage intérieur. Les filetages des rouleaux sont en prise avec les filetages de la vis et de l'écrou.

En sus des éléments listés ci-dessus, un mécanisme de vis à rouleaux comprend également un dispositif de maintien des rouleaux.

Dans le cas d'un mécanisme de vis à rouleaux satellites comme celui illustrée en figure 1A, le dispositif de maintien comprend deux couronnes 140a et 140b munies respectivement de dentures intérieures 142a et 142b dans lesquelles s'engrènent des dentures extérieures 122a et 122b situées aux extrémités des rouleaux 120 ; des bagues annulaires 150a et 150b montées entre la vis et les couronnes, comprenant des évidements cylindriques traversant 152a et 152b dans lesquels sont logés des tourillons 124a et 124b prolongeant les extrémités des rouleaux correspondants ; et des joncs 160a et 160b montés chacun dans une gorge prévue dans une couronne correspondante de sorte à maintenir les bagues annulaires.

Lorsque la vis est en rotation, les rouleaux tournent sur eux-mêmes et autour de la vis, et entraînent un mouvement de translation de l'écrou. La figure 1C indique des plans de coupes longitudinales, i.e. parallèles à l'axe longitudinal 170 de la vis du mécanisme de la figure 1A.

Des coupes longitudinales Am orthogonales au plan de la figure se situent à des distances DAm de l'axe longitudinal 170 de la vis et intersectent les segments de droite le long desquels les filets d'un des rouleaux et de la vis entrent en contact, m représentant un indice d'identification.

De façon similaire, des coupes longitudinales Bn orthogonales au plan de la figure se situent à des distances DBn de l'axe 170 de la vis et intersectent les segments de droite le long desquelles les filets d'un des rouleaux et de l'écrou entrent en contact, n représentant un indice d'identification.

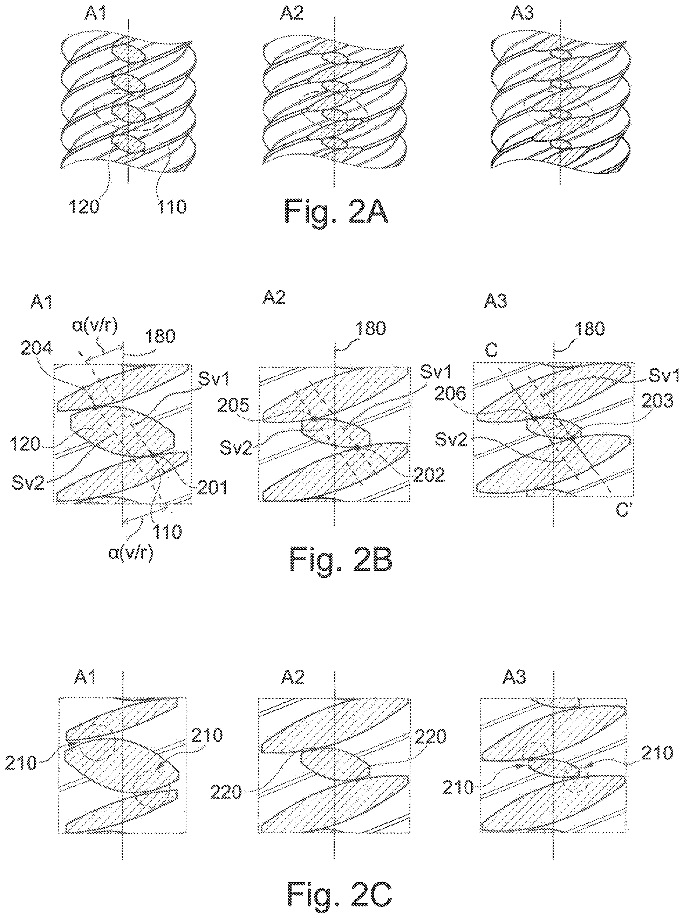

En ce qui concerne l'interface vis/rouleau, trois coupes, A1, A2 et A3 telles que définies ci-dessus selon trois distances respectives DA1, DA2 et DA3 sont représentées en Figure 2A, avec DA1 < DA2 < DA3. La figure 2B représente des agrandissements des régions entourées de pointillés dans la figure 2A, et montre les points de contact 201, 202 et 203 dans un premier plan de contact Sv1 entre un premier flanc du filetage du rouleau 120 et le filetage de la vis 110, et les points de contact 204, 205 et 206 dans un second plan de contact Sv2 entre un second flanc du filetage du rouleau 120 et le filetage de la vis 110, ces points de contact étant marqués par des disques pleins, à différentes distances de l'axe de la vis 110. Ces points de contact correspondent aux intersections des segments de droites de contact entre le rouleau et la vis avec les plans des coupes A1, A2 et A3.

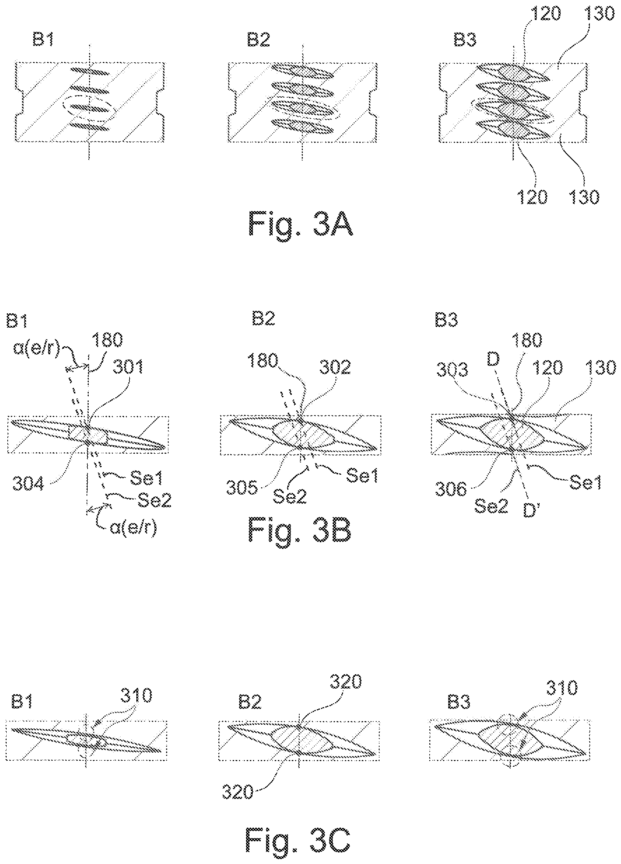

En ce qui concerne l'interface rouleau/écrou, trois coupes, B1, B2 et B3 telles que définies ci-dessus selon trois distances respectives DB1, DB2 et DB3 sont représentées en Figure 3A, avec DB1 < DB2 < DB3.

La figure 3B représente des agrandissements des régions entourées de pointillés dans la figure 3A, et montre les points de contact 301, 302 et 303 dans un premier plan de contact Se1 entre un premier flanc du filetage du rouleau 120 et le filetage de l'écrou 130, et les points de contacts dans un second plan de contact Se2 entre un second flanc du filetage du rouleau 120 et le filetage de l'écrou 130, ces points de contact étant marqués par des disques pleins, à différentes distances à l'axe de la vis 110. Ces points de contact correspondent aux intersections des segments de droites de contact entre le rouleau et l'écrou avec les plans des coupes.

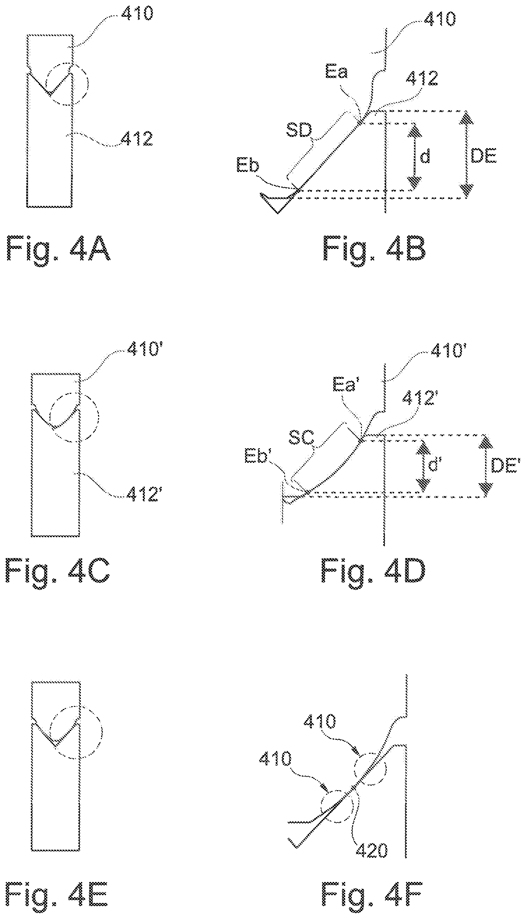

Des coupes en biais le long du parcours CC' de la figure 2B et le long du parcours DD' de la figure 3B sont illustrées par les figures 4A et 4B.

Les figures 4A et 4B servent à illustrer aussi bien l'interface vis/rouleau que l'interface rouleau/écrou, l'élément 410 représentant une portion du rouleau et l'élément 412 une portion de la vis ou une portion de l'écrou, de façon interchangeable.

Ces coupes sont définies de manière à visualiser les segments de droites de contact entre le rouleau et chacun de la vis et de l'écrou. Comme illustré dans les figures 4A et 4B, à l'interface de contact, les filetages des rouleaux ont un profil rigoureusement droit, et entrent en contact avec les filetages de la vis et de l'écrou selon une géométrie de contacts à segments curvilignes, ici selon des segments de droites SD comprenant les points de contact 201 à 206 ou 301 à 306 indiqués dans la figure 2B ou 3B, respectivement. Plus le segment de droite est long, plus la capacité de charge du mécanisme est importante.

La longueur du segment de contact est naturellement limitée par les longueurs des flancs des filetages.

Comme indiqué par la figure 4A, les deux flancs opposés des filetages des rouleaux coopèrent avec les filetages de la vis et de l'écrou selon une géométrie de contact à segment curviligne, et plus exactement selon des segments de droites.

Ainsi, deux portions des flancs d'un filetage de la vis ou de l'écrou se faisant face sont en contact avec deux flancs opposés du filet d'un rouleau, respectivement. La figure 4B illustre que, dans un plan de contact (ici, le plan de la figure), le profil de l'élément 410 et le profil de l'élément 412 sont deux profils conjugués, c'est-à-dire qu'ils sont conjugués l'un de l'autre sur la longueur du segment de droite SD d'extrémités Ea et Eb. Les profils peuvent être décrits par une ligne droite sur la longueur dudit segment de droite et peuvent donc être décrits par une même équation sur la longueur dudit segment de droite, de sorte que les profils permettent une géométrie de contact non ponctuel mais à segment curviligne entre les deux éléments 410 et 412. Les segments de contact vis/rouleau appartiennent aux plans Sv1 et Sv2, qui sont des plans de contact et qui sont selon l'invention nettement décalés de l'axe longitudinal de la vis, c'est-à-dire nettement distincts des plans médians de la vis, ce qui peut se déduire de la figure 2B où on a illustré trois coupes A1, A2, A3 avec la coupe A1 étant la plus profonde et la coupe A3 la plus éloignée de l'axe 170 de la vis. On voit que les points 201 à 203 d'une part et les points 204 à 206 d'autre part définissent des segments de contact qui sont dans des plans de contact décalés angulairement d'un angle α(v/r) par rapport à un plan médian 180 du mécanisme passant par l'axe longitudinal 170 de la vis et l'axe longitudinal 175 du rouleau considéré, et donc décalés angulairement par rapport à l'axe longitudinal 170 de la vis. Autrement dit, les segments de contact vis/rouleau n'appartiennent pas à un plan médian de la vis.

L'angle α(v/r) peut être compris, selon l'invention entre 0,5° et 45°, la figure 2B illustrant un cas où cet angle vaut approximativement 30°.

Les segments de contacts rouleau/écrou, eux, appartiennent aux plans Se1 et Se2, qui sont des plans de contact et qui sont, selon l'invention, décalés de l'axe longitudinal de la vis, et distincts mais proches des plans médians de la vis, de sorte qu'il est difficile de fournir des figures illustrant cette caractéristique. On voit sur la figure 3B que les points 301 à 303 d'une part et les points 304 à 306 d'autre part définissent des segments de contact qui sont dans des plans de contact décalés angulairement d'un angle α(e/r) par rapport à un plan médian 180 du mécanisme passant par l'axe longitudinal 170 de la vis et l'axe longitudinal 175 du rouleau considéré, et donc décalés angulairement par rapport à l'axe longitudinal 170 de la vis.

L'angle α(e/r) peut être compris, selon l'invention entre 0,5° et environ 45°, tout en restant, pour un mécanisme de vis à rouleaux donné, strictement inférieur à l'angle α(v/r), la figure 2B illustrant un cas où cet angle vaut approximativement 15°.

Une distance d'engagement DE des filets des rouleaux dans le filet de la vis peut être définie comme une différence de distance à l'axe de la vis entre le sommet du filetage d'un rouleau et le sommet du filetage de la vis dans un plan de contact lorsque le mécanisme de vis à rouleaux est monté. La distance d de la figure 4B indique la différence de distances à l'axe longitudinal de la vis entre les deux extrémités Ea et Eb du segment de droite de contact SD entre la vis et l'un des rouleaux dans le cas où les éléments 410 et 412 représentent respectivement une vis et un rouleau.

De façon similaire, une distance d'engagement DE des filets des rouleaux dans le filet de l'écrou peut être définie comme une différence de distance à l'axe de la vis entre le sommet du filetage d'un rouleau et le sommet du filetage de l'écrou dans un plan de contact. Ces distances correspondent à DE dans la figure 4B.

Si les coupes A1 et A3 montrées sur la figure 2B sont séparées par une distance représentant au moins 10% de la distance DE, alors, dans le cas d'un contact vis-rouleau, la différence de distances d à l'axe longitudinal de la vis entre les deux extrémités Ea et Eb du segment de droite de contact SD entre la vis et l'un des rouleaux est égale à au moins 10% de la distance d'engagement DE. Mais les coupes A1 et A3 peuvent être séparées d'une distance allant jusqu'à au moins 40%, 60% ou 70% de DE et alors la différence de distances d peut être égale à au moins 40%, 60% ou 70%, respectivement de la distance DE. Une augmentation de d, s'accompagne d'une augmentation de la capacité de charge de la vis à rouleaux, d ayant pour limite supérieure la distance d'engagement DE.

De façon similaire, si les coupes B1 et B3 montrées sur la figure 3B sont séparées par une distance représentant au moins 10% de la distance DE, alors, dans le cas d'un contact rouleau-écrou, la différence de distances d à l'axe longitudinal de la vis entre les deux extrémités Ea et Eb du segment de droite de contact SD entre l'un des rouleaux et l'écrou est égale à au moins 10% de la distance d'engagement DE. Mais les coupes B1 et B3 peuvent être séparées d'une distance allant jusqu'à au moins 40%, 60% ou 70% de DE et alors la différence de distances d peut être égale à au moins 40%, 60% ou 70%, respectivement de la distance DE. Une augmentation de d s'accompagne ici aussi d'une augmentation de la capacité de charge de la vis à rouleaux, d ayant pour limite supérieure la distance d'engagement DE.

Il peut être préférable d'avoir des capacités de charges entre la vis et les rouleaux d'une part, et entre les rouleaux et l'écrou d'autre part, égales.

Pour comparaison avec les mécanismes utilisés jusqu'ici, basés sur une géométrie à contacts ponctuels, nous nous reporterons aux figures 2C, 3C, 4E et 4F, qui sont des équivalents des figures 2B, 3B, 4A et 4B, mais illustrant le cas d'un contact ponctuel au lieu d'une géométrie à contacts curvilignes.

La figure 2C illustre qu'une seule coupe longitudinale, la coupe A2 ici, peut mettre en évidence un point de contact ponctuel 220 entre un rouleau et la vis. Dans des coupes plus proches ou plus éloignées de l'axe de la vis que la coupe A2, comme les coupes A1 et A3, des espacements 210 séparent le rouleau de la vis.

De façon similaire, la figure 3C illustre qu'une seule coupe longitudinale, la coupe B2 ici, peut mettre en évidence un point de contact ponctuel 320 entre un rouleau et l'écrou. Dans des coupes plus proches ou plus éloignées de l'axe de la vis que la coupe B2, comme les coupes B1 et B3, des espacements 310 séparent le rouleau de l'écrou.

Ainsi, les figures 4E et 4F ne permettent de visualiser qu'un contact ponctuel 420 entre le rouleau et la vis ou entre le rouleau et l'écrou, et non des segments de courbes ou de droites comme dans la présente invention. Des espacements 410 correspondant aux espacements 210 et 310 des figures 2C et 3C, respectivement, encadrent le contact ponctuel 420.

Il est à noter que des interfaces de contact ne peuvent être rigoureusement considérées comme curvilignes que dans des situations de charge nulle. Lorsque la charge devient non-nulle, des déformations des matériaux dues aux contraintes auxquelles sont soumis les éléments des mécanismes apparaissent et les interfaces de contact suivent alors des géométries mettant en jeu des surfaces, et non plus des lignes.

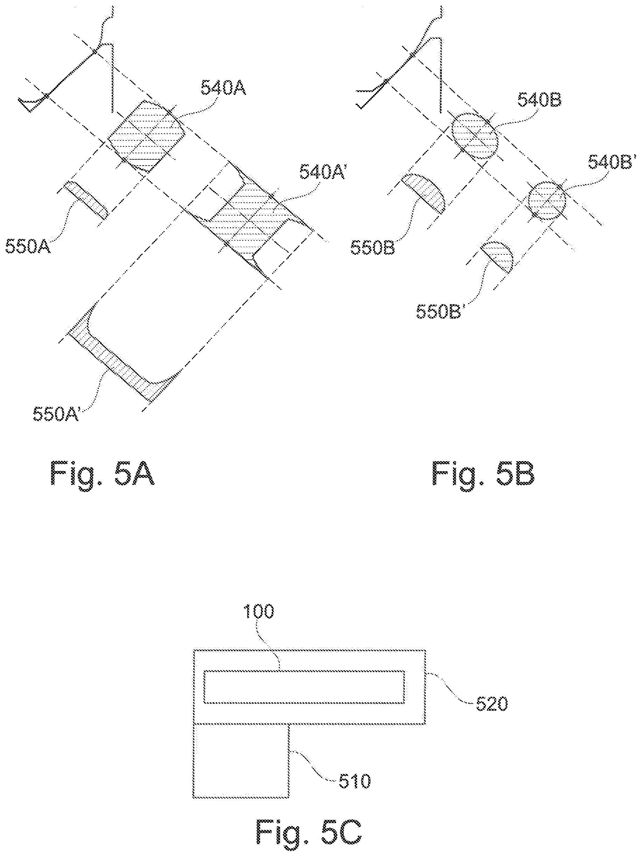

Dans ce mode de réalisation, sous charge, la géométrie des interfaces de contact s'apparente à un rectangle ou à la section d'une clavette selon la situation. La figure 5A illustre une aire de contact 540A de forme s'apparentant à un rectangle et une aire 540A' pouvant se décrire comme la section d'une clavette. A ces aires de contact correspondent les allures de distribution de pression 550A et 550A', qui présentent des zones de pression approximativement constantes. Il est à noter que dans ces situations, le contact est dit non-hertzien, dans le sens où la description d'Hertz modélisant la contrainte entre deux objets en contact ne s'applique pas.

Pour comparaison, la figure 5B illustre des situations de contact ponctuels pour lesquels l'aire de contact forme une ellipse 540B ou un cercle 540B', avec des allures de distribution 550B et 550B' de pression formant des calottes. Ici, la description d'Hertz s'applique.

Un autre aspect du mécanisme de vis à rouleaux selon l'invention concerne l'avance par tour de la vis. Dans un système de vis à rouleaux, cette avance est proportionnelle au diamètre de la vis. Selon l'approche conventionnelle, reposant sur des contacts ponctuels, l'avance ne peut pas dépasser le diamètre de la vis.

Une géométrie de contact curviligne selon l'invention permet de maintenir les contacts vis/rouleau et rouleau/écrou sur des plages de géométries plus larges que pour les cas de contacts ponctuels. Ainsi non seulement des avances par tour équivalentes à celles de l'approche traditionnelle à contacts ponctuels, mais aussi des avances par tour supérieures au diamètre de la vis, peuvent être obtenues. Le mécanisme à rouleaux selon l'invention peut ainsi bénéficier d'avances par tour plus grandes qu'une fois le diamètre de la vis, et jusqu'à quatre fois le diamètre de la vis.

Un actionneur schématisé en figure 5C met à profit le mécanisme de vis à rouleaux 100 décrit plus haut en le couplant à un système d'entraînement mécanique 510 par un système de couplage 520. Le système d'entraînement mécanique peut, par exemple, être un système d'entraînement manuel ou comprendre un moteur électrique.

### Description d'un second mode de réalisation

Le second mode de réalisation diffère du premier mode de réalisation en ce que les filetages des rouleaux ont des flancs concaves ou convexes et entrent en contact avec les filetages de la vis et de l'écrou selon de segments de courbes, et non selon des segments de droite.

Dans le cas d'un contact entre deux surfaces hélicoïdales (surface extérieure d'une vis ou d'un rouleau ou surface intérieure d'un écrou) se faisant le long d'un segment de courbe, le plan de contact est le plan contenant ledit segment de courbe. Dans le cas du mécanisme de vis à rouleaux selon l'invention, ce plan de contact est distinct du plan commun aux axes longitudinaux des deux surfaces hélicoïdales. A la différence du cas du contact selon un segment de droite, il n'existe pas de plan tangent commun aux deux surfaces hélicoïdales et contenant en outre ledit segment de courbe.

Dans ce mode de réalisation, lorsque les filetages des rouleaux ont des flancs concaves, les filetages de la vis et du rouleau ont des flancs convexes. Inversement, lorsque les filetages des rouleaux ont des flancs convexes, les filetages de la vis et du rouleau ont des flancs concaves. Comme dans le premier mode de réalisation, les flancs du filetage des rouleaux sont conjugués à ceux des filetages de la vis et de l'écrou.

A l'exception des figures 4A et 4B et des commentaires correspondants, on peut se reporter au descriptif du premier mode de réalisation.

On se réfèrera en revanche aux figures 4C et 4D pour examiner les particularités du second mode de réalisation.

Les figures 4C et 4D servent à illustrer aussi bien l'interface vis/rouleau que l'interface rouleau/écrou pour le second mode de réalisation, l'élément 410' représentant une portion du rouleau et l'élément 412' une portion de la vis ou une portion de l'écrou, de façon interchangeable.

A la différence du premier mode de réalisation, les contacts vis/rouleau et rouleau/écrou se font selon des segments de courbes SC et non selon des segments de droites. Cependant, comme dans le premier mode de réalisation, lesdits segments de courbes sont compris dans des plans dits plans de contact nettement distincts des plans médians de la vis dans le cas des contacts vis/rouleaux.

La figure 4D illustre, dans un plan de contact (ici, le plan de la figure), le profil de l'élément 410' et le profil de l'élément 412' conjugués l'un de l'autre sur la longueur du segment de courbe SC. Les profils peuvent être décrits par deux courbes réciproques dans ce plan et sur la longueur dudit segment de courbe : l'une des deux courbes est convexe, l'autre des deux courbes est concave, et elles peuvent être décrites par une même équation sur la longueur dudit segment de courbe, de sorte que les profils permettent une géométrie de contact non ponctuel mais à segment curviligne entre les deux éléments 410' et 412'.

Selon l'invention, la conformité des profils des rouleaux et de la vis au niveau des zones de contact est totale, ce qui signifie que les rayons de courbure des profils du rouleau et de la vis dans le plan de contact sont exactement les mêmes. De la même manière, la conformité des profils des rouleaux et de l'écrou au niveau des zones de contact est totale, ce qui signifie que les rayons de courbure des profils du rouleau et de l'écrou dans le plan de contact sont exactement les mêmes.

Ceci peut se caractériser par l'osculation, définie comme la moitié du rapport entre le rayon de courbure du profil concave ou convexe de la vis ou de l'écrou sur le rayon de courbure du profil du rouleau au centre du contact. Dans la géométrie de contact curviligne selon ce mode de réalisation, l'osculation vaut 0,5.

En revanche, dans le cas d'une géométrie de contacts ponctuels, l'osculation ne peut jamais être égale à 0,5, quelque soit le profil, et sera toujours strictement supérieure à 0,5.

Une distance d'engagement DE' des filets des rouleaux dans le filet de la vis peut être définie comme une différence de distance à l'axe de la vis entre le sommet du filetage d'un rouleau et le sommet du filetage de la vis lorsque le mécanisme de vis à rouleaux est monté. La distance d' de la figure 4D indique la différence de distances à l'axe longitudinal de la vis entre les deux extrémités Ea' et Eb' du segment de courbe de contact SC entre la vis et l'un des rouleaux dans le cas où les éléments 410' et 412' représentent respectivement une vis et un rouleau.

De façon similaire, une distance d'engagement DE' des filets des rouleaux dans le filet de l'écrou peut être définie comme une différence de distance à l'axe de la vis entre le sommet du filetage d'un rouleau et le sommet du filetage de l'écrou. Ces distances correspondent à DE' dans la figure 4D.

Si les coupes A1 et A3 montrées sur la figure 2B sont séparées par une distance représentant au moins 10% de la distance DE', alors, dans le cas d'un contact vis-rouleau, la différence de distance d' à l'axe longitudinal de la vis entre les deux extrémités Ea' et Eb' du segment de courbe de contact SC entre la vis et l'un des rouleaux est égale à au moins 10% de la distance d'engagement DE'. Mais les coupes A1 et A3 peuvent être séparées d'une distance allant jusqu'à au moins 40%, 60%, 70% ou 80% de DE' et alors la différence de distances d' peut être égale à au moins 40%, 60%, 70% ou 80%, respectivement de la distance DE'. Une augmentation de d', s'accompagne d'une augmentation de la capacité de charge de la vis à rouleaux, d' ayant pour limite supérieure la distance d'engagement DE' .

De façon similaire, si les coupes B1 et B3 montrées sur la figure 3B sont séparées par une distance représentant au moins 10% de la distance DE', alors, dans le cas d'un contact rouleau-écrou, la différence de distances d' à l'axe longitudinal de la vis entre les deux extrémités Ea' et Eb' du segment de courbe de contact SC entre l'un des rouleaux et l'écrou est égale à au moins 10% de la distance d'engagement DE'. Mais les coupes B1 et B3 peuvent être séparées d'une distance allant jusqu'à au moins 40%, 60%, 70% ou 80% de DE' et alors la différence de distances d' peut être égale à au moins 40%, 60%, 70% ou 80%, respectivement de la distance DE'. Une augmentation de d' s'accompagne ici aussi d'une augmentation de la capacité de charge de la vis à rouleaux, d' ayant pour limite supérieure la distance d'engagement DE'.

Il peut être préférable d'avoir des capacités de charges entre la vis et les rouleaux d'une part, et entre les rouleaux et l'écrou d'autre part, égales.

Dans ce mode de réalisation, sous charge, la géométrie des interfaces de contact s'apparente à une calotte torique.

## Revendications

1. Mécanisme de vis à rouleaux comprenant :
- une vis (110) munie d'un filetage extérieur ;
- un écrou (130) entourant coaxialement la vis (130) et muni d'un filetage intérieur ; et
- des rouleaux (120) chacun muni d'un filetage extérieur, chaque rouleau (120) étant interposé entre la vis (110) et l'écrou (130) de sorte que les filetages des rouleaux s'engrènent dans les filetages de la vis et de l'écrou,
**caractérisé en ce que** :
les filetages des rouleaux sont conjugués aux filetages de la vis et de l'écrou de sorte que, à charge nulle, les filetages des rouleaux coopèrent sur leurs deux flancs avec les filetages de la vis et de l'écrou selon une géométrie de contact à segment curviligne (SD ; SC), et
les rouleaux entrent respectivement en contact avec la vis et l'écrou selon des segments de contact (SD ; SC) appartenant à des plans décalés angulairement par rapport à un plan médian (180) du mécanisme passant par un axe longitudinal (170) de la vis (110) et un axe longitudinal (175) du rouleau considéré.

2. Mécanisme de vis à rouleaux selon la revendication 1, **caractérisé en ce que,** au niveau des zones de contact :
- les filetages des rouleaux ont un profil droit, et
- les filetages des rouleaux entrent en contact avec les filetages de la vis et de l'écrou selon des segments de droites (SD).

3. Mécanisme de vis à rouleaux selon la revendication 1, **caractérisé en ce que,** au niveau des zones de contact :
- les filetages des rouleaux entrent en contact avec les filetages de la vis et de l'écrou selon des segments de courbes (SC), et
- les filetages des rouleaux ont un profil convexe et les filetages de la vis et de l'écrou ont un profil concave, ou
- les filetages des rouleaux ont un profil concave et les filetages de la vis et de l'écrou ont un profil convexe.

4. Mécanisme de vis à rouleaux selon l'une quelconque des revendications précédentes, **caractérisé en ce qu'**une avance par tour du mécanisme est comprise entre zéro fois et une fois le diamètre de la vis (110).

5. Mécanisme de vis à rouleaux selon l'une quelconque des revendications précédentes, **caractérisé en ce qu'**une avance par tour du mécanisme est comprise entre plus de une fois et quatre fois le diamètre de la vis (110).

6. Mécanisme de vis à rouleaux selon l'une quelconque des revendications précédentes, **caractérisé en ce que** si on considère une distance d'engagement (DE ; DE') définie comme une première différence de distances à l'axe longitudinal de la vis entre un sommet du filetage de l'un des rouleaux et un sommet du filetage de la vis lorsque le mécanisme de vis à rouleaux est monté, et si on considère une seconde différence de distances (d ; d') à l'axe longitudinal de la vis entre les deux extrémités (Ea, Eb ; Ea', Eb') du segment de contact (SD ; SC) entre la vis et l'un des rouleaux, alors ladite seconde différence de distances (d ; d') est égale à au moins 10% de ladite distance d'engagement (DE ; DE').

7. Dispositif d'actionnement **caractérisé en ce qu'**il comprend un mécanisme de vis à rouleaux selon l'une quelconque des revendications précédentes.

## Patentansprüche

1. Walzenschraubenmechanismus, umfassend:
- eine Schraube (110), die mit einem Außengewinde versehen ist;
- eine Mutter (130), die koaxial die Schraube (130) umgibt und mit einem Innengewinde versehen ist; und
- Walzen (120), von denen jede mit einem Außengewinde versehen ist, wobei jede Walze (120) zwischen der Schraube (110) und der Mutter (130) derart angeordnet ist, dass die Gewinde der Walzen in die Gewinde der Schraube und der Mutter eingreifen,
**dadurch gekennzeichnet, dass**:
die Gewinde der Walzen mit den Gewinden der Schraube und der Mutter derart verbunden sind, dass, ohne Belastung, die Gewinde der Walzen an ihren beiden Flanken mit den Gewinden der Schraube und der Mutter gemäß einer Kontaktgeometrie mit einem gebogenen Segment (SD; SC) zusammenwirken,
und
die Walzen jeweils mit der Schraube oder mit der Mutter gemäß den Kontaktsegmenten (SD; SC) in Kontakt gelangen, welche zu Ebenen gehören, die winkelmäßig in Bezug auf eine Mittelebene (180) des Mechanismus versetzt sind, welche durch eine Längsachse (170) der Schraube (110) und eine Längsachse (175) der betreffenden Walze hindurchgeht.

2. Walzenschraubenmechanismus nach Anspruch 1, **dadurch gekennzeichnet, dass**, auf der Höhe der Kontaktzonen:
- die Gewinde der Walzen ein gerades Profil aufweisen, und
- die Gewinde der Walzen mit den Gewinden der Schraube und der Mutter gemäß den geraden Segmenten in Kontakt gelangen.

3. Walzenschraubenmechanismus nach Anspruch 1, **dadurch gekennzeichnet, dass**, auf der Höhe der Kontaktzonen:
- die Gewinde der Walzen mit den Gewinden der Schraube und der Mutter gemäß den gekrümmten Segmenten (SC) in Kontakt gelangen, und
- die Gewinde der Walzen ein konvexes Profil aufweisen, und die Gewinde der Schraube und der Mutter ein konkaves Profil aufweisen, oder
- die Gewinde der Walzen ein konkaves Profil aufweisen, und die Gewinde der Schraube und der Mutter ein konvexes Profil aufweisen.

4. Walzenschraubenmechanismus nach einem der vorhergehenden Ansprüche, **dadurch gekennzeichnet, dass** ein Vorschub pro Umdrehung des Mechanismus zwischen dem Nullfachen und dem Einfachen des Durchmessers der Schraube (110) liegt.

5. Walzenschraubenmechanismus nach einem der vorhergehenden Ansprüche, **dadurch gekennzeichnet, dass** ein Vorschub pro Umdrehung des Mechanismus zwischen mehr als dem Einfachen und dem Vierfachen des Durchmessers der Schraube (110) liegt.

6. Walzenschraubenmechanismus nach einem der vorhergehenden Ansprüche, **dadurch gekennzeichnet, dass**, wenn eine Eingriffdistanz (DE; DE') berücksichtigt wird, die als erste Differenz der Distanzen zur Längsachse der Schraube zwischen einem Scheitel des Gewindes von einer der Walzen und einem Scheitel des Gewindes der Schraube definiert wird, wenn der Walzenschraubenmechanismus montiert ist, und wenn eine zweite Differenz der Distanzen (d; d') zur Längsachse der Schraube zwischen den beiden Enden (Ea, Eb; Ea', Eb') des Kontaktsegments (SD; SC) zwischen der Schraube und einer der Walzen berücksichtigt wird, die genannte zweite Differenz der Distanzen (d; d') dann gleich mindestens 10 % der genannten Eingriffdistanz (DE; DE') ist.

7. Betätigungsvorrichtung, **dadurch gekennzeichnet, dass** sie einen Walzenschraubenmechanismus nach einem der vorhergehenden Ansprüche umfasst.

## Claims

1. A roller screw mechanism comprising:
- a screw (110) provided with an external thread;
- a nut (130) coaxially surrounding the screw (130) and provided with an internal thread; and
- rollers (120), each of which is provided with an external thread, each roller (120) being interposed between the screw (110) and the nut (130) so that the threads of the rollers mesh with the threads of the screw and of the nut;
said roller screw mechanism being **characterized in that**:
the threads of the rollers are complementary to the threads of the screw and of the nut so that, at zero load, the threads of the rollers co-operate on both of their flanks with the threads of the screw and of the nut in a contact geometry having curvilinear segments (SD; SC) ; and
the rollers come into contact respectively with the screw and with the nut along contact segments (SD; SC) lying in planes that are offset angularly relative to a midplane (180) of the mechanism that contains a longitudinal axis (170) of the screw (110) and a longitudinal axis (175) of the roller in question.

2. A roller screw mechanism according to claim 1, **characterized in that**, at the contact zones:
- the threads of the rollers have straight profiles; and
- the threads of the rollers come into contact with the threads of the screw and of the nut along straight line segments (SD).

3. A roller screw mechanism according to claim 1, **characterized in that**, at the contact zones:
- the threads of the rollers come into contact with the threads of the screw and of the nut along curve segments (SC); and
- the threads of the rollers have convex profiles and the threads of the screw and of the nut have concave profiles; or
- the threads of the rollers have concave profiles and the threads of the screw and of the nut have convex profiles.

4. A roller screw mechanism according to any preceding claim, **characterized in that** an advance per turn of the mechanism lies in the range zero times the diameter of the screw (110) to one time the diameter of the screw (110).

5. A roller screw mechanism according to any preceding claim, **characterized in that** an advance per turn of the mechanism lies in the range greater than one time the diameter of the screw (110) to four times the diameter of the screw (110).

6. A roller screw mechanism according to any preceding claim, **characterized in that** if consideration is given to an engagement distance (DE; DE') defined as a first difference in distances to the longitudinal axis of the screw between a crest of the thread of one of the rollers and a crest of the thread of the screw when the roller screw mechanism is assembled, and if consideration is given to a second difference in distances (d; d') to the longitudinal axis of the screw between the two ends (Ea, Eb; Ea', Eb') of the contact segment (SD, SC) between the screw and one of the rollers, then said second difference in distances (d; d') is equal to at least 10% of said engagement distance (DE; DE').

7. An actuator device, **characterized in that** it includes a roller screw mechanism according to any preceding claim.
